# FASCICULE DE BREVET EUROPEEN

(11) **EP 3 364 479 B1**
(45) Date de publication et mention de la délivrance du brevet: **25.11.2020**
(21) Numéro de dépôt: 18152829.0
(22) Date de dépôt: 22.01.2018
(51) Int. Cl.: H01M 2/02, H01M 2/04

(54) **PILE, NOTAMMENT PILE BOUTON, ET SON PROCEDE DE FABRICATION**
BATTERIE, INSBESONDERE KNOPFBATTERIE, UND IHR HERSTELLUNGSVERFAHREN
BATTERY, IN PARTICULAR A BUTTON CELL, AND METHOD FOR MANUFACTURING SAME

(30) Priorité: 21.02.2017 EP 17157252
(43) Date de publication de la demande: 22.08.2018
(73) Titulaire: The Swatch Group Research and Development Ltd, 2074 Marin (CH)
(72) Inventeur: Vuille, Pierry, 2338 Les Emibois (CH); Erdemli, François, 2013 Colombier (CH); Haering, Pascal, 4132 Muttenz (CH); Yildiz, Burhan, 4402 Frenkendorf (CH)
(74) Mandataire: ICB SA

(56) Documents cités:
- EP-A1- 1 441 400
- JP-A- S5 717 557
- JP-A- S6 056 358
- JP-A- S57 115 758
- US-A1- 2006 178 708
- US-A1- 2014 087 239
- US-A1- 2015 140 417

## Description

### Domaine technique

La présente invention se rapporte à un procédé de fabrication de piles et, en particulier, de piles boutons. Elle se rapporte également à la pile issue du procédé de fabrication susmentionné.

### Arrière-plan technologique

Les piles boutons comportent généralement un boîtier muni d'un récipient et d'un couvercle formant respectivement les pôles positif et négatif de la pile. De manière conventionnelle, les piles boutons sont scellées avec un joint élastomère préformé qui est positionné entre le récipient et le couvercle. Ce joint élastomère assure l'isolation galvanique entre les pôles et forme une barrière entre l'électrolyte contenue à l'intérieur de la pile et l'environnement extérieur. Un tel assemblage est montré, par exemple, dans le document GB 1 566 061. Un autre exemple est donné dans le document JP S60 56358 qui propose une pile dont le boîtier métallique est en trois parties avec deux parties soudées constituant l'électrode positive. La troisième partie formant l'électrode négative a, en coupe transversale, un profil en T. Cette électrode négative a une partie introduite axialement dans une ouverture d'un couvercle formant l'électrode positive. Les deux électrodes sont isolées l'une relativement à l'autre par un joint élastomère préformé qui entoure le bord de ladite ouverture et qui s'étend dessus et dessous le couvercle. On remarquera que la réalisation divulguée dans ce document japonais présente un grand risque de ne pas avoir une bonne étanchéité car la compression du joint élastomère n'est pas assurée.

Un autre type de batterie est divulgué dans le document US 2015/0140417. Le boîtier de cette batterie est également en trois parties métalliques avec deux parties soudées (récipient et couvercle) formant une première électrode et une troisième partie formant une seconde électrode qui est agencée dans une ouverture du couvercle. L'agencement de la seconde électrode dans l'ouverture est complexe avec, pour l'isoler de la première électrode, deux joints élastomères préformés dont l'un présente un profil particulier conduisant à des variations importantes de son épaisseur.

Un assemblage avec joint élastomère préformé présente comme désavantage d'occuper un espace non négligeable qui va restreindre le volume actif de la pile. De plus, il nécessite généralement une étape de pliage d'une partie d'une électrode pour comprimer le joint élastomère préformé et assurer ainsi une fermeture étanche de la pile bouton.

On connaît aussi des documents JP S57-017557 et JP S57-115758 des piles formées par une première partie, définissant un premier pôle, et une deuxième partie, définissant partiellement un second pôle, lesquelles sont assemblées au moyen d'un joint colle de manière à former un récipient pour une matière active. Le récipient est fermé par une troisième partie soudée à la deuxième partie et formant avec cette dernière le second pôle.

### Résumé de l'invention

Pour réduire l'espace alloué à la jonction, un joint colle en lieu et place du joint élastomère préformé est une solution prometteuse, mais qui pose certains problèmes techniques. En effet, il faut garantir la bonne adhérence de la colle sur les surfaces à assembler et, de manière générale, garantir la résistance mécanique et chimique de l'assemblage collé dans le temps. A cet égard, une attention particulière doit être portée au choix de la colle et au mode opératoire du collage lors de l'assemblage deux pôles du boîtier. L'homme du métier sélectionnera notamment des colles ayant des températures de polymérisation peu élevées pour ne pas détériorer le séparateur disposé au sein de la matière active dans le boîtier. Ainsi, il est préconisé de ne pas monter au-delà de 70°C, ce qui limite les possibilités de choisir la colle la plus adaptée pour assurer la meilleure résistance mécanique et chimique de l'assemblage. Ensuite, lors du scellement du boîtier par collage, un soin particulier doit être apporté pour éviter de polluer la colle ou les surfaces de collage avec l'électrolyte qui est généralement présente au sein du boîtier, ce qui compromettrait l'adhérence de la colle sur les surfaces de collage et donc la résistance mécanique de l'assemblage.

La présente invention propose un nouveau procédé de fabrication de piles permettant de gagner en volume actif et d'améliorer les propriétés d'un assemblage collé des deux pôles de la pile.

A cette fin, un procédé de fabrication ainsi qu'une pile selon les revendications annexées sont proposés.

La présente invention propose de fabriquer le boîtier de la pile par un assemblage d'au moins trois parties, la première partie sert à former un pôle de la pile alors qu'une deuxième partie et une troisième partie sont prévus pour former ensemble l'autre pôle de la pile. Dans un mode de réalisation principal, les deuxième et troisième parties forment après assemblage un récipient de la pile qui est fermé de manière étanche par la première partie.

Plus précisément, l'assemblage est réalisé en deux temps. Dans un premier temps, la première partie et la seconde partie sont assemblées par collage pour former une structure présentant un joint colle entre ses première et deuxième parties. Un espaceur est incorporé dans la colle du joint colle pour garantir une épaisseur minimale de ce joint colle. Dans une variante, le joint colle présente une épaisseur sensiblement constante qui est maîtrisée par l'espaceur. Le collage des première et deuxième parties est effectué avant un remplissage éventuel de la structure avec de la matière active liquide et, dans une variante préférée, aussi avant un remplissage éventuel de la structure avec de la matière active solide. Le joint colle est agencé de manière à isoler électriquement les première et deuxième parties. Ainsi, on évite de polluer avec l'électrolyte la colle ou les deux surfaces prévues pour le collage. L'apport de la matière active après collage a également pour avantage d'élargir le choix des colles à des colles requérant des hautes températures de polymérisation. Dans un second temps, après remplissage de la structure et/ou de la troisième partie au moins avec la matière active solide prévue, le boîtier est fermé par un soudage entre la troisième partie et la structure.

Une caractéristique importante du procédé de fabrication selon l'invention consiste à agencer le joint colle de manière à ce qu'il travaille principalement en compression, et non en traction, lors d'une surpression interne. A cet effet, les première, deuxième et troisième parties sont formées et assemblées de manière qu'une première portion de la première partie, définissant au moins partiellement une première surface de collage, et une deuxième portion de la deuxième partie, définissant au moins partiellement une deuxième surface de collage, sont agencées l'une en face de l'autre et s'étendent chacune dans une surface géométrique non parallèle à un axe général du boîtier défini par l'alignement général de ses deux pôles. Les deuxième et troisième parties sont soudées de manière à former ensemble un récipient avec la deuxième portion susmentionnée formant une butée, selon la direction dudit axe général, pour la première portion qui est située à l'intérieur du récipient relativement à cette butée. La première partie ferme le récipient de manière étanche à l'aide du joint colle. La deuxième surface est une surface intérieure du récipient contre laquelle est disposé le joint colle et la surface de collage de la première partie est donc disposée à l'intérieur du récipient. Le joint colle est ainsi principalement sollicité en compression, et non en traction ou en cisaillement, sous l'effet d'une pression interne dans le boîtier de la pile. Grâce à cette construction, l'adhérence du joint colle sera donc d'autant meilleure que la pression augmente, contrairement à un assemblage avec un joint colle positionné à l'extérieur du récipient.

L'agencement du joint colle à l'intérieur du récipient est facilité grâce au procédé d'assemblage en deux temps selon l'invention. En effet, en concevant et dimensionnant spécifiquement les diverses parties du boîtier, il est possible d'obtenir un tel agencement sans bordage ou sertissage. Plus précisément, selon un mode de mise en œuvre préféré, la deuxième partie présente, relativement à l'axe général du boîtier, une section intérieure transversale minimale sur toute la hauteur de cette deuxième partie entre, d'un côté, une ouverture et, d'un autre côté, la butée mentionnée précédemment, cette section intérieure transversale minimale ayant des dimensions qui sont prévues supérieures à des dimensions correspondantes de la première partie en projection dans un plan transversal à l'axe général. La première partie est, lors de l'étape de collage, introduite par l'ouverture susmentionnée dans la deuxième partie et elle est déplacée sensiblement selon l'axe général jusqu'à ce que la première portion soit assemblée avec la deuxième portion par une couche de colle située entre elles et formant ensuite le joint colle.

On remarquera que le soudage en présence d'électrolyte ne présente pas un problème particulier pour la qualité du joint soudé obtenu. Tout au plus l'aspect esthétique de la zone de soudure peut éventuellement être affecté. Cependant, une simple étape de nettoyage final peut remédier à ce problème éventuel. Ainsi, un léger débordement d'électrolyte lors du positionnement de la troisième partie pour son soudage (généralement on met la matière active sous pression lors de la fermeture du boîtier) est brulé lors de la réalisation de la soudure.

Grâce au procédé de fabrication d'une pile selon l'invention, il est possible de sélectionner une colle appropriée pour sa résistance mécanique et chimique et d'effectuer le collage dans un environnement parfaitement propre, sans risque de dégrader la colle avant son durcissement et surtout en évitant de souiller les surfaces de collage des deux parties assemblées par collage.

### Brève description des figures

L'invention sera décrite ci-après de manière plus détaillée à l'aide des dessins annexés, donnés à titre d'exemples nullement limitatifs, dans lesquels :
- Les figures 1a, 1b et 1c représentent, par des vues en coupe, les étapes successives du procédé de fabrication d'une pile selon l'invention.
- Les figures 2 à 4 représentent en coupe plusieurs variantes du boîtier de pile issu du procédé de fabrication selon l'invention. Ces différentes variantes se distinguent par la géométrie de la partie supérieure du boîtier et dès lors par la géométrie du joint colle. En outre, à la figure 2, le joint colle comporte des espaceurs.
- Les figures 5 et 6 représentent respectivement des variantes des figures 3 et 1c avec le joint soudé positionné à d'autres endroits sur le récipient.
- La figure 7 représente schématiquement différentes couches qui peuvent, selon des variantes préférées, être déposées sur les surfaces d'assemblage avant collage.

### Description détaillée de l'invention

La présente invention se rapporte à un procédé de fabrication d'une pile, en particulier d'une pile bouton, assemblée par collage et soudage partant d'au moins trois parties.

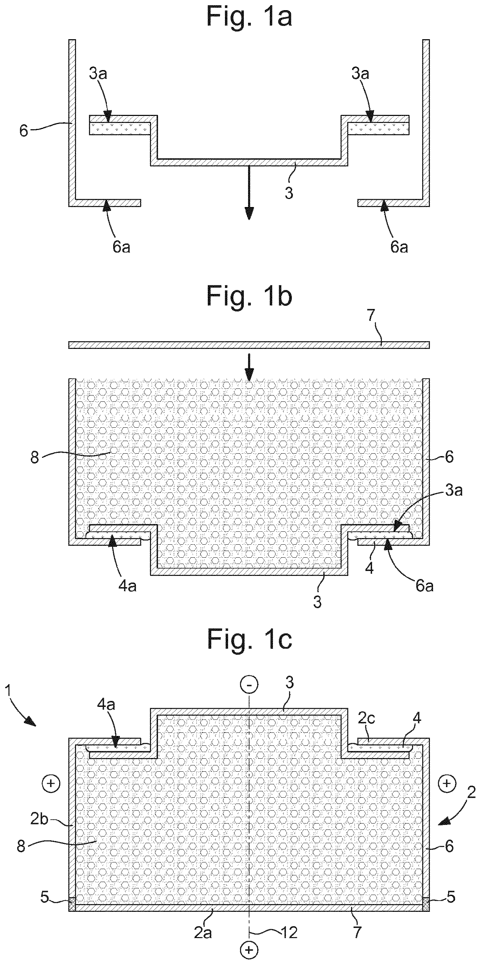

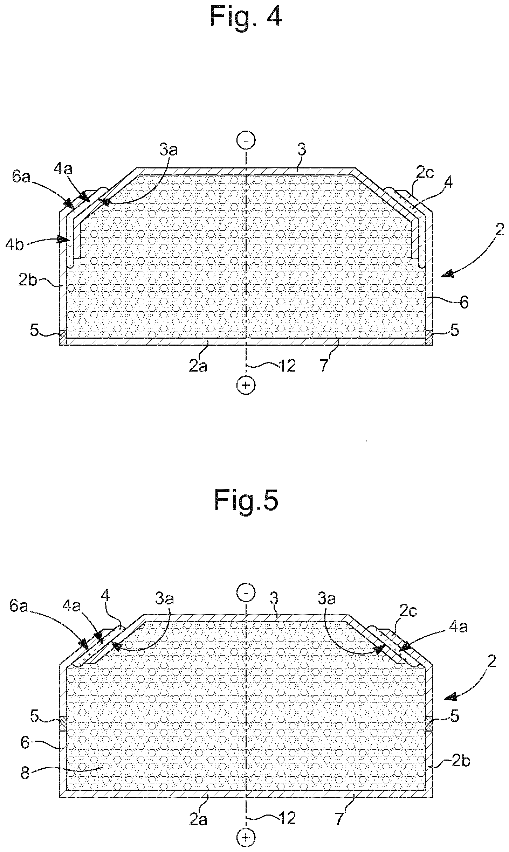

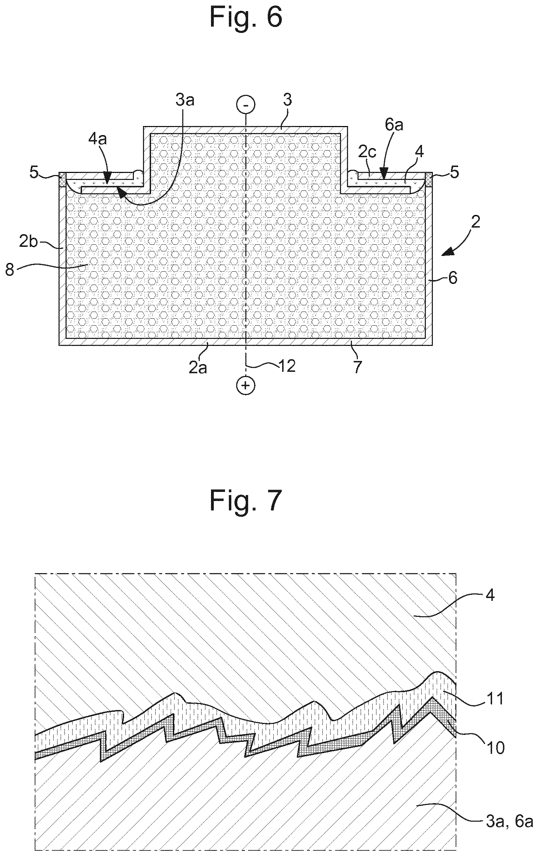

Comme illustré entre autres à la figure 1c, la pile bouton, issue de ce procédé de fabrication, comporte un boîtier métallique 1 formé d'un récipient 2, définissant le pôle positif de la pile, et d'une partie de fermeture 3 définissant le pôle négatif de la pile et fermant le récipient. Selon l'invention, la liaison entre la partie de fermeture et le récipient est assurée par un joint colle 4 et la liaison entre au moins deux parties formant le récipient est assurée par une soudure 5, avec ou sans apport de matière, qui est nommée par la suite 'joint soudé'. Toujours selon l'invention, le joint colle est disposé sur une face intérieure du récipient 2 et le joint soudé peut être positionné à différents endroits du récipient. Par exemple, il peut être positionné à la jonction entre le fond 2a et la paroi latérale 2b du récipient 2 (figure 1c), sur la paroi latérale 2b à une hauteur variable (figure 5) ou encore à hauteur du joint colle 4 à la jonction entre la paroi latérale 2b et un rebord 2c du récipient (figure 6).

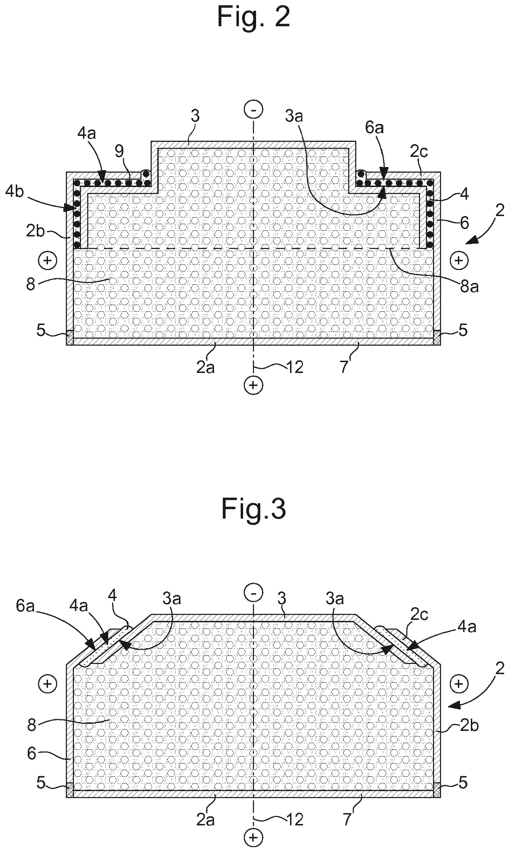

Selon l'invention, le joint colle 4 est formé d'au moins une portion 4a qui s'étend dans une surface non parallèle à l'axe général 12 de la pile dont l'orientation est définie par les deux pôles. Cet axe général définit ici également un axe central de la pile. Dans le cas particulier d'une pile avec une enveloppe principalement cylindrique, cela signifie que le joint colle comporte une portion de forme non cylindrique. Cette portion du joint colle sera sollicitée avantageusement en compression lors d'une surpression à l'intérieur du boîtier, ce qui garantit la bonne résistance mécanique du joint colle. Dans les exemples donnés aux figures 1, 2 et 6, la portion 4a est perpendiculaire à l'axe général 12 tandis que dans les exemples des figures 3 et 4, elle est de biais par rapport à l'axe général 12 formant ainsi une surface tronconique. En plus de la portion 4a non parallèle à l'axe général 12, dans une variante, le joint colle 4 peut comporter une portion 4b parallèle à l'axe général (figures 2 et 4).

Pour obtenir le boitier, le procédé de fabrication selon l'invention comporte plusieurs étapes décrites ci-après. Au moins trois parties sont mises à disposition. Une première partie 3 est prévue pour former un élément de fermeture du récipient. Bien que la surface de collage de cette première partie soit, dans le cadre de la présente invention, située à l'intérieur du volume général défini par le récipient 2, on la nommera toutefois aussi 'couvercle'. Cette première partie 3 comporte une surface de collage 3a qui s'étend dans une surface non parallèle par rapport à l'axe général 12.

Une deuxième partie 6 et une troisième partie 7 sont destinées à constituer le récipient 2 du boîtier après soudage. La géométrie de ces parties peut être diverse en fonction de la forme souhaitée du boîtier. Dans les exemples illustrés, l'enveloppe du boîtier est principalement cylindrique mais d'autres géométries (triangulaire, rectangulaire) sont aisément réalisables. A ce sujet, on remarquera que le procédé de fabrication selon l'invention se prête bien à la fabrication de boîtiers ayant des arêtes latérales. En effet, contrairement à un joint élastomère comprimé par sertissage, un joint colle ou un joint soudé ne présente pas de problèmes relatifs à l'étanchéité dans les régions à proximité de ces arêtes latérales. La deuxième partie comporte une surface de collage 6a de forme correspondante à celle 3a de la première partie, c'est-à-dire qui s'étend dans une surface non parallèle par rapport à l'axe général 12. Cette surface de collage 6a est disposée sur une face intérieure de la deuxième partie 6 ou, dans le cas d'une deuxième partie plane (figure 6), sur une surface destinée à définir un surface intérieure du récipient après le soudage prévu avec la troisième partie. La deuxième partie est destinée à former le rebord 2c du récipient et, selon la variante, tout ou partie de la paroi latérale 2b du récipient. La troisième partie 7 est destinée à former, après l'assemblage du boîtier, le fond 2a du récipient et, selon la variante, tout ou partie de la paroi latérale du récipient.

Dans une première étape montrée schématiquement à la figure 1a, les première et deuxième parties sont collées entre elles. Plus précisément, la surface 3a de la première partie 3 est assemblée par collage avec la surface 6a de la deuxième partie 6 via une introduction de la première partie dans la deuxième partie par l'ouverture de cette deuxième partie située du côté destiné à définir le fond du boîtier après sa fabrication. Pour réaliser cette étape, il est prévu que la deuxième partie présente, relativement à son axe général définissant l'axe général d'alignement des pôles du boîtier assemblé, une section intérieure transversale minimale sur toute la hauteur de cette deuxième partie entre, d'un côté, l'ouverture côté fond et, d'un autre côté, une butée pour la première partie, cette butée étant formée par la portion 2c de la deuxième partie qui est tournée vers l'intérieur du récipient et qui définit la surface de collage 6a. La section intérieure transversale minimale a des dimensions qui sont prévues supérieures à des dimensions correspondantes de la première partie en projection dans un plan transversal à l'axe général. Dans le cas d'une pile de forme circulaire, ceci signifie que le diamètre intérieur de la deuxième partie est prévu supérieur au diamètre de la première partie. Pour une pile de forme rectangulaire, c'est donc la largeur et la longueur intérieures de la deuxième partie qui sont respectivement supérieures à la largeur et la longueur de la première partie. Ainsi, la première partie est, lors de l'étape de collage, introduite dans la deuxième partie par une première ouverture, ayant les plus grandes dimensions, et déplacée, sensiblement selon l'axe général, en direction d'une deuxième ouverture aux dimensions moindres jusqu'à ce que la première portion soit reliée à la deuxième portion par une couche de colle située entre elles, cette couche de colle formant après durcissement un joint colle garantissant l'assemblage rigide des deux pôles de la pile et l'isolation galvanique entre eux.

La structure résultante avec les première et deuxième parties assemblées par un joint colle 4 peut former une enveloppe apte à réceptionner les matières actives (figures 1 à 5) avant l'étape de soudage décrite par la suite.

La colle utilisée peut être une colle époxyde, acrylate, polyuréthane ou autres. Le panel est large puisque le procédé de fabrication selon l'invention n'impose pas de limites sur les températures de polymérisation, l'assemblage collé étant réalisé avant l'apport de matière active et, le cas échéant, d'un séparateur pour cette matière active.

De préférence, le joint colle a une épaisseur sensiblement constante. L'épaisseur du joint colle est maîtrisée au moyen d'un espaceur 9 (voir figure 2). On garantit ainsi une épaisseur minimale du joint colle qui est prévue pour avoir l'isolation galvanique voulue entre les deux pôles. On entend par espaceur aussi bien un ensemble d'éléments répartis dans la jonction tel que des particules ou plots qu'une structure continue telle qu'un tissu. L'espaceur peut être préalablement intégré à la colle avant dépose de cette dernière ou positionné sur une ou les deux surfaces à assembler avant dépose de la colle.

Afin d'améliorer l'adhérence du joint colle, les surfaces à assembler peuvent éventuellement avoir été traitées, voire fonctionnalisées avant le dépôt de la couche de colle. Plus précisément, elles peuvent d'abord être soumises à un sablage réactif, nommé aussi silicatisation, qui consiste à sabler la surface avec des grains d'alumine enrobés de silice. Il en résulte le dépôt d'une couche silicatisée 10 schématisée à la figure 7. Ensuite, elles peuvent optionnellement être fonctionnalisées par dépôt d'un promoteur d'adhésion 11 comprenant par exemple des groupes silanes dont les fonctions alkoxyl sont destinées à former une liaison chimique avec la couche silicatisée 10, et comprenant d'autres fonctions destinées à se lier chimiquement avec la colle. Selon le type de colle, il peut, par exemple, s'agir de groupes amines ou acrylates. On remarquera qu'un promoteur d'adhésion peut être prévu sur les surfaces à coller sans sablage préalable.

Après le collage, l'étape suivante schématisée à la figure 1b consiste à introduire au moins les matières actives solides 8 dans la structure avant de sceller le boîtier. On entend par matières actives, les matières actives non liquides telles que les matières sèches ou pâteuses anodique et cathodique ainsi qu'éventuellement le séparateur, et la matière active liquide telle que l'électrolyte. Les matières actives sont disposées soit dans la structure collée (configuration des figures 1-4), soit dans la troisième partie 7 (configuration de la figure 6). Il est également envisageable de répartir les matières actives dans la structure collée et dans la troisième partie (figure 5).

Ensuite, dans une troisième étape, le boîtier est terminé par soudage entre la structure collée et la troisième partie 7 destinée à définir le fond du boîtier. Cette troisième partie est apportée contre le bord de l'ouverture de la deuxième partie ayant servi à l'introduction de la première partie. Le soudage peut être réalisé avec ou sans apport de brasure. Différents types de soudage (ultrasons, brasage, etc.) sont envisagés. La préférence va au soudage laser qui a pour avantage de fournir une source importante de chaleur très localisée qui est rapidement dissipée sans risque de compromettre la tenue du boîtier ou de la matière active.

Dans diverses variantes, le joint soudé 5 peut se positionner à différents endroits du récipient. La construction avec le joint soudé positionné entre la paroi latérale 2b et le rebord 2c du récipient (figure 6) est avantageuse car elle permet de garantir la conductivité entre le fond et la partie latérale du récipient sans contrainte aucune sur la soudure. Cet assemblage offre également comme avantage d'être simple à réaliser.

Finalement, on précisera que le procédé selon l'invention a été décrit avec une étape de remplissage de l'ensemble des matières actives se déroulant entre l'étape de collage et l'étape de soudage. Il est important de souligner que c'est principalement la matière active liquide, à savoir l'électrolyte, qui doit être introduite après l'étape de collage pour éviter de salir les surfaces à assembler et de contaminer la colle. Il est donc envisageable d'introduire la matière sèche ou pâteuse anodique avant l'étape de collage du couvercle. Aussi, il est envisageable de positionner le séparateur 8a dans la partie inférieure du joint colle 4 avant sa polymérisation pour le maintenir en place, en prévoyant alors que la température de polymérisation de la colle ne soit pas trop élevée (figure 2). De même, la présente invention n'exclut pas d'introduire l'électrolyte après soudage de l'assemblage via un orifice pratiqué dans le récipient ou le couvercle et qui sera obstrué par la suite, de préférence par une soudure.

### Légende des figures

(1) Boîtier
(2) Récipient
   (a) Fond
   (b) Paroi latérale
   (c) Rebord, tourné vers l'intérieur du récipient
(3) Couvercle ou première partie
   (a) Surface de collage
(4) Joint colle
   (a) Portion non parallèle à l'axe général
   (b) Portion parallèle à l'axe général
(5) Joint soudé
(6) Deuxième partie
   (a) Surface de collage
(7) Troisième partie
(8) Matières actives
   (a) Séparateur
(9) Espaceur, incorporé dans le joint colle
(10) Couche de silice
(11) Couche du promoteur d'adhésion
(12) Axe général du boîtier confondu avec son axe central

## Revendications

1. Procédé de fabrication d'une pile, en particulier d'une pile bouton, comprenant un boîtier (1) qui définit un premier pôle et un second pôle de la pile, l'alignement général de ces premier et second pôles définissant un axe général (12) de la pile ;
le procédé comportant les étapes suivantes :
- mise à disposition d'au moins trois parties avec une première partie destinée à former le premier pôle (3), une deuxième partie (6) et une troisième partie (7) destinées à former ensemble le second pôle (2) ;
- assemblage des première et deuxième parties avec interposition d'un joint électriquement isolant entre une première surface (3a) de la première partie et une deuxième surface (6a) de la deuxième partie, les première et deuxième parties étant formées et assemblées de manière qu'une première portion de la première partie, définissant au moins partiellement la première surface, et une deuxième portion de la deuxième partie, définissant au moins partiellement la deuxième surface, s'étendent chacune dans une surface non parallèle audit axe général (12) et l'une en face de l'autre ;
- soudage de la troisième partie (7) avec la deuxième partie (6) de manière à former ensemble un récipient (2), ces deuxième et troisième parties présentant ainsi un joint soudé entre elles ;
ledit assemblage des première et deuxième parties étant réalisé par collage des première (3a) et deuxième (6a) surfaces pour fournir une structure formée des première et deuxième parties et présentant entre celles-ci un joint colle (4) formant ledit joint électriquement isolant ; ladite étape d'assemblage des première et deuxième parties intervenant avant ladite étape de soudage de la troisième partie (7) avec la deuxième partie ; ladite deuxième portion formant une butée, selon la direction dudit axe général, pour la première portion qui est située à l'intérieur du récipient relativement à cette butée, la deuxième surface étant une surface intérieure du récipient contre laquelle est disposé ledit joint colle, la première partie fermant le récipient de manière étanche à l'aide du joint colle ; le procédé de fabrication comprenant, avant ladite étape de soudage de la troisième partie avec la deuxième partie, une étape de remplissage au moins partiel de ladite structure et/ou de ladite troisième partie avec au moins une matière active solide ; **caractérisé en ce qu'**une épaisseur minimale du joint colle (4) est garantie par un espaceur (9) incorporé dans la colle de ce joint colle.

2. Procédé selon la revendication 1, **caractérisé en ce que** ladite deuxième partie présente, relativement audit axe général, une section intérieure transversale minimale sur toute la hauteur de cette deuxième partie entre, d'un côté, une ouverture et, d'un autre côté, ladite butée, cette section intérieure transversale minimale ayant des dimensions qui sont prévues supérieures à des dimensions correspondantes de la première partie en projection dans un plan transversal à l'axe général ; et **en ce que** ladite première partie est, lors de ladite étape de collage, introduite par ladite ouverture dans la deuxième partie et déplacée selon ledit axe général jusqu'à ce que ladite première portion soit assemblée avec la deuxième portion par une couche de colle située entre elles et formant ledit joint colle.

3. Procédé selon la revendication 1 ou 2, **caractérisé en ce que** le joint colle (4) a une épaisseur constante maîtrisée au moyen dudit espaceur (9).

4. Procédé selon l'une quelconque des revendications 1 à 3, **caractérisé en ce que** lesdites première et deuxième surfaces sont, avant collage, traitées par sablage réactif pour déposer une couche de silice (10) sur chacune de ces première et deuxième surfaces.

5. Procédé selon la revendication 4, **caractérisé en ce que** les première (3a) et deuxième (6a) surfaces sont fonctionnalisées par un dépôt d'une couche d'un promoteur d'adhésion (11) sur chacune d'elles ou, le cas échéant, sur des couches de silice déposées préalablement sur ces première et deuxième surfaces.

6. Procédé selon une quelconque des revendications précédentes, **caractérisé en ce que** ladite troisième partie (7) et/ou ladite structure est également remplie avec une matière active liquide avant ladite étape de soudage.

7. Procédé selon une quelconque des revendications précédentes, **caractérisé en ce que** lesdites première et deuxième portions sont planes ou tronconiques.

8. Pile, en particulier pile bouton, comprenant un boîtier (1) qui définit un premier pôle et un second pôle de la pile ainsi qu'un axe général (12) dont l'orientation correspond à un alignement général des premier et second pôles, le boîtier comprenant une première partie (3), formant le premier pôle, ainsi qu'une deuxième partie (6) et une troisième partie (7) qui forment ensemble un récipient (2) définissant le second pôle et présentant entre elles un joint soudé ; une première surface (3a) de la première partie (3) et une deuxième surface (6a) de la deuxième partie (6) comprenant entre elles un joint électriquement isolant, ces première et deuxième parties étant agencées de manière qu'une première portion de la première partie, définissant au moins partiellement la première surface, et une deuxième portion de la deuxième partie, définissant au moins partiellement la deuxième surface, s'étendent chacune dans un plan non parallèle audit axe général (12) et parallèlement l'une en face de l'autre ; ledit joint électriquement isolant étant un joint colle (4) liant la première surface (3a) de la première partie avec la deuxième surface (6a) de la deuxième partie ; ladite deuxième portion formant une butée, selon la direction dudit axe général, pour la première portion qui est située à l'intérieur du récipient relativement à cette butée, la deuxième surface étant une surface intérieure du récipient contre laquelle est disposé ledit joint colle et la première partie fermant le récipient de manière étanche à l'aide de ce joint colle ; **caractérisée en ce qu'**un espaceur (9) est incorporé dans la colle du joint colle (4) pour garantir une épaisseur minimale de ce joint colle.

9. Pile selon la revendication 8, **caractérisée en ce que** le récipient (2) comporte un fond (2a) surmonté d'une paroi latérale (2b) qui est terminée par un rebord (2c) formant au moins partiellement ladite butée, ledit joint soudé (5) étant positionné à la jonction entre le fond (2a) et la paroi latérale (2b).

10. Pile selon la revendication 8, **caractérisée en ce que** le récipient (2) comporte un fond (2a) surmonté d'une paroi latérale (2b) qui est terminée par un rebord (2c) formant au moins partiellement ladite butée, ledit joint soudé (5) étant positionné sur la paroi latérale (2b).

11. Pile selon la revendication 8, **caractérisée en ce que** le récipient (2) comporte un fond (2a) surmontée d'une paroi latérale (2b) terminée par un rebord (2c) formant au moins partiellement ladite butée, ledit joint soudé (5) étant positionné à la jonction entre la paroi latérale (2b) et le rebord (2c).

12. Pile selon l'une quelconque des revendications 9 à 11, **caractérisée en ce qu'**il n'y a aucune superposition entre ladite première partie (3) et la paroi latérale (2b) du récipient (2).

13. Pile selon l'une quelconque des revendications 8 à 12, **caractérisée en ce que** le joint colle (4) a une épaisseur constante maîtrisée au moyen dudit espaceur (9).

14. Pile selon l'une quelconque des revendications 8 à 13, **caractérisée en ce que** le joint colle (4) est intercalé entre deux couches de silice (10) ancrées dans lesdites première et deuxième surfaces (3a, 6a).

15. Pile selon l'une quelconque des revendications 8 à 14, **caractérisée en ce que** le joint colle (4) est lié chimiquement aux première et deuxième surfaces ou, le cas échéant, aux couches de silice (10) déposées sur celles-ci par l'intermédiaire d'une couche d'un promoteur d'adhésion (11).

## Patentansprüche

1. Verfahren zur Herstellung einer Batterie, insbesondere einer Knopfzelle, umfassend ein Gehäuse (1), das einen ersten Pol und einen zweiten Pol der Batterie definiert, wobei die allgemeine Ausrichtung dieses ersten und dieses zweiten Pols eine allgemeine Achse (12) der Batterie definiert;
wobei das Verfahren die folgenden Schritte umfasst:
- Bereitstellen von mindestens drei Teilen, wobei ein erstes Teil dazu vorgesehen ist, den ersten Pol (3) zu bilden, ein zweites Teil (6) und ein drittes Teil (7) dazu vorgesehen sind, zusammen den zweiten Pol (2) zu bilden;
- Zusammenfügen des ersten und des zweiten Teils mit Einfügung einer elektrisch isolierenden Verbindung zwischen einer ersten Fläche (3a) des ersten Teils und einer zweiten Fläche (6a) des zweiten Teils, wobei das erste und das zweite Teil gebildet und zusammengefügt werden, so dass ein erster Abschnitt des ersten Teils, der die erste Fläche zumindest zum Teil definiert, und ein zweiter Abschnitt des zweiten Teils, der die zweite Fläche zumindest zum Teil definiert, sich jeweils auf einer Fläche, die nicht parallel zu der allgemeinen Achse (12) ist, und einander gegenüber erstrecken;
- Verschweißen des dritten Teils (7) mit dem zweiten Teil (6), um zusammen ein Behältnis (2) zu bilden, wobei dieses erste und dieses zweite Teil somit eine Schweißverbindung zwischen ihnen aufweisen;
wobei das Zusammenfügen des ersten und des zweiten Teils durch Verkleben der ersten (3a) und der zweiten (6a) Fläche durchgeführt wird, um eine Struktur zu liefern, die von dem ersten und dem zweiten Teil gebildet wird und zwischen diesen eine Klebeverbindung (4) aufweist, die die elektrisch isolierende Verbindung bildet; wobei der Schritt des Zusammenfügens des ersten und des zweiten Teils vor dem Schritt des Verschweißens des dritten Teils (7) mit dem zweiten Teil erfolgt; wobei der zweite Abschnitt einen Anschlag entlang der Richtung der allgemeinen Achse für den ersten Abschnitt bildet, der sich im Inneren des Behältnisses in Bezug auf diesen Anschlag befindet, wobei die zweite Fläche eine Innenfläche des Behältnisses ist, gegen die die Klebeverbindung angeordnet ist, wobei das erste Teil das Behältnis mithilfe der Klebeverbindung dicht verschließt; wobei das Herstellungsverfahren vor dem Schritt des Verschweißens des dritten Teils mit dem zweiten Teil einen Schritt des Füllens der Struktur und/oder des dritten Teils zumindest zum Teil mit mindestens einem festen aktiven Material umfasst; **dadurch gekennzeichnet, dass** eine minimale Dicke der Klebeverbindung (4) durch einen Abstandhalter (9) sichergestellt wird, der in den Klebstoff dieser Klebeverbindung integriert ist.

2. Verfahren nach Anspruch 1, **dadurch gekennzeichnet, dass** das zweite Teil in Bezug auf die allgemeine Achse einen minimalen inneren Querteilbereich auf der gesamten Höhe des zweiten Teils zwischen einer Öffnung auf einer Seite und dem Anschlag auf der anderen Seite aufweist, wobei dieser minimale innere Querteilbereich Abmessungen hat, von denen vorgesehen ist, dass sie größer sind als entsprechende Abmessungen des ersten Teils bei Projektion auf eine Ebene, die quer zu der allgemeinen Achse ist; und dass das erste Teil während dem Schritt des Verklebens durch die Öffnung in das zweite Teil eingebracht und entlang der allgemeinen Achse bewegt wird, bis der erste Abschnitt mit dem zweiten Teil durch eine Klebeschicht, die sich zwischen ihnen befindet und die Klebeverbindung bildet, zusammengefügt ist.

3. Verfahren nach Anspruch 1 oder 2, **dadurch gekennzeichnet, dass** die Klebeverbindung (4) eine konstante Dicke hat, die mittels des Abstandhalters (9) kontrolliert wird.

4. Verfahren nach einem der Ansprüche 1 bis 3, **dadurch gekennzeichnet, dass** die erste und die zweite Fläche vor dem Verkleben durch reaktives Sandstrahlen behandelt werden, um eine Siliciumdioxidschicht (10) auf jeder von dieser ersten und dieser zweiten Fläche abzuscheiden.

5. Verfahren nach Anspruch 4, **dadurch gekennzeichnet, dass** die erste (3a) und die zweite (6a) Fläche durch eine Abscheidung einer Schicht eines Haftvermittlers (11) auf jeder dieser oder gegebenenfalls auf Siliciumdioxidschichten, die zuvor auf dieser ersten und dieser zweiten Fläche abgeschieden wurden, funktionalisiert werden.

6. Verfahren nach einem der vorhergehenden Ansprüche, **dadurch gekennzeichnet, dass** das dritte Teil (7) und/oder die Struktur vor dem Schritt des Verschweißens ebenfalls mit einem flüssigen aktiven Material gefüllt werden.

7. Verfahren nach einem der vorhergehenden Ansprüche, **dadurch gekennzeichnet, dass** der erste und der zweite Abschnitt eben oder kegelförmig sind.

8. Batterie, insbesondere Knopfzelle, umfassend ein Gehäuse (1), das einen ersten Pol und einen zweiten Pol der Batterie sowie eine allgemeine Achse (12) definiert, deren Orientierung einer allgemeinen Ausrichtung des ersten und des zweiten Pols entspricht, wobei das Gehäuse ein erstes Teil (3), das den ersten Pol bildet, sowie ein zweites Teil (6) und ein drittes Teil (7), die zusammen ein Behältnis (2) bilden, das den zweiten Pol definiert und zwischen ihnen eine Schweißverbindung aufweist; eine erste Fläche (3a) des ersten Teils (3) und eine zweite Fläche (6a) des ersten Teils (6) umfasst, die zwischen ihnen eine elektrisch isolierende Verbindung umfassen, wobei dieses erste und dieses zweite Teil eingerichtet sind, so dass ein erster Abschnitt des ersten Teils, der die erste Fläche zumindest zum Teil definiert, und ein zweiter Abschnitt des zweiten Teils, der die zweite Fläche zumindest zum Teil definiert, sich jeweils auf einer Ebene, die nicht parallel zu der allgemeinen Achse (12) ist, und parallel einander gegenüber erstrecken; wobei die elektrisch isolierende Verbindung eine Klebeverbindung (4) ist, die die erste Fläche (3a) des ersten Teils mit der zweiten Fläche (6a) des zweiten Teils verbindet; wobei der zweite Abschnitt einen Anschlag entlang der Richtung der allgemeinen Achse für den ersten Abschnitt bildet, der sich im Inneren des Behältnisses in Bezug auf diesen Anschlag befindet, wobei die zweite Fläche eine Innenfläche des Behältnisses ist, gegen die die Klebeverbindung angeordnet ist, und das erste Teil das Behältnis mithilfe dieser Klebeverbindung dicht verschließt; **dadurch gekennzeichnet, dass** ein Abstandhalter (9) in den Klebstoff der Klebeverbindung (4) integriert ist, um eine minimale Dicke dieser Klebeverbindung sicherzustellen.

9. Batterie nach Anspruch 8, **dadurch gekennzeichnet, dass** das Behältnis (2) einen Boden (2a) umfasst, über den sich eine Seitenwand (2b) erhebt, die durch eine Kante (2c) abgeschlossen wird, die zumindest zum Teil den Anschlag bildet, wobei die Schweißverbindung (5) an der Verbindungsstelle zwischen dem Boden (2a) und der Seitenwand (2b) positioniert wird.

10. Batterie nach Anspruch 8, **dadurch gekennzeichnet, dass** das Behältnis (2) einen Boden (2a) umfasst, über den sich eine Seitenwand (2b) erhebt, die durch eine Kante (2c) abgeschlossen wird, die zumindest zum Teil den Anschlag bildet, wobei die Schweißverbindung (5) auf der Seitenwand (2b) positioniert wird.

11. Batterie nach Anspruch 8, **dadurch gekennzeichnet, dass** das Behältnis (2) einen Boden (2a) umfasst, über den sich eine Seitenwand (2b) erhebt, die durch eine Kante (2c) abgeschlossen wird, die zumindest zum Teil den Anschlag bildet, wobei die Schweißverbindung (5) an der Verbindungsstelle zwischen der Seitenwand (2b) und der Kante (2c) positioniert wird.

12. Batterie nach einem der Ansprüche 9 bis 11, **dadurch gekennzeichnet, dass** keine Überlagerung zwischen dem ersten Teil (3) und der Seitenwand (2b) des Behältnisses (2) vorliegt.

13. Batterie nach einem der Ansprüche 8 bis 12, **dadurch gekennzeichnet, dass** die Klebeverbindung (4) eine konstante Dicke hat, die mittels des Abstandhalters (9) kontrolliert wird.

14. Batterie nach einem der Ansprüche 8 bis 13, **dadurch gekennzeichnet, dass** die Klebeverbindung (4) zwischen zwei Siliciumdioxidschichten (10) eingeschoben ist, die in der ersten und der zweiten Fläche (3a, 6a) verankert sind.

15. Batterie nach einem der Ansprüche 8 bis 14, **dadurch gekennzeichnet, dass** die Klebeverbindung (4) chemisch mit der ersten und der zweiten Fläche oder gegebenenfalls mit den Siliciumdioxidschichten (10), die auf diesen mittels einer Schicht eines Haftvermittlers (11) abgeschieden wurden, verbunden wird.

## Claims

1. Method for manufacturing a battery, in particular a button cell battery, comprising a casing (1) which defines a first pole and a second pole of the battery, the general alignment of these first and second poles defining a general axis (12) of the battery;
the method including the following steps:
- providing at least three parts, with a first part intended to form the first pole (3), a second part (6) and a third part (7) intended to form together the second pole (2),
- assembling the first and second parts with the interposition of an electrically isolating joint between a first surface (3a) of the first part and a second surface (6a) of the second part, the first and second parts being formed and assembled such that a first portion of the first part, at least partially defining the first surface, and a second portion of the second part, at least partially defining the second surface, each extend in a surface non-parallel to said general axis (12) and one opposite the other;
- welding the third part (7) to the second part (6) so as to form together a cup (2), these second and third parts thus having therebetween a welded joint;
said assembly of the first and second parts being performed by bonding the first (3a) and second (6a) surfaces to provide a structure formed of the first and second parts with an adhesive joint (4) therebetween forming said electrically isolating joint; said step of assembling the first and second parts occurring before said step of welding the third part (7) to the second part; said second portion forming a stop, in the direction of said general axis, for the first portion, which is located inside the cup relative to this stop, the second surface being an inner surface of the cup against which said adhesive joint is disposed, the first part closing the cup in a sealed manner with the aid of the adhesive joint; the manufacturing method comprising, before said step of welding the third part to the second part, a step of at least partially filling said structure and/or said third part with at least one solid active material; **characterised in that** a minimum thickness of the adhesive joint (4) is guaranteed by a separator (9) incorporated in the adhesive of this adhesive joint.

2. Method according to claim 1, **characterised in that**, relative to said general axis, said second part has a minimum inner cross-section throughout the height of this second part, between an opening on one side and said stop on the other side, this minimum inner cross-section having dimensions that are arranged to be greater than corresponding dimensions of the first part in projection into a plane transverse to the general axis; and **in that**, in said bonding step, said first part is inserted through said opening into the second part and moved along said general axis until said first portion is assembled to the second portion by an adhesive layer located therebetween and forming said adhesive joint.

3. Method according to claim 1 or 2, **characterised in that** the adhesive joint (4) has a constant thickness controlled by means of a separator (9).

4. Method according to any one of claims 1 to 3, **characterised in that** said first and second surfaces are, prior to bonding, treated by reactive sandblasting to deposit a silica layer (10) on each of these first and second surfaces.

5. Method according to claim 4, **characterised in that** the first (3a) and second (6a) surfaces are functionalised by depositing a layer of an adhesion promoter (11) on each said surface or, as appropriate, on silica layers pre-deposited on these first and second surfaces.

6. Method according to any one of the preceding claims, **characterised in that** said third part (7) and/or said structure is also filled with a liquid active material prior to said welding step.

7. Method according to any one of the preceding claims, **characterised in that** said first and second portions are flat or truncated.

8. Battery, in particular a button cell battery, comprising a casing (1) which defines a first pole and a second pole of the battery and a general axis (12) whose orientation corresponds to a general alignment of the first and second poles, the casing comprising a first part (3), forming the first pole, as well as a second part (6) and a third part (7) which form together a cup (2) defining the second pole and having a welded joint therebetween; a first surface (3a) of the first part (3) and a second surface (6a) of the second part (6) comprising an electrically isolating joint therebetween, these first and second parts being arranged such that a first portion of the first part, at least partially defining the first surface, and a second portion of the second part, at least partially defining the second surface, each extend in a plane non-parallel to said general axis (12) and extend in parallel one opposite the other; said electrically isolating joint being an adhesive joint (4) connecting the first surface (3a) of the first part to the second surface (6a) of the second part; said second portion forming a stop, in the direction of said general axis, for the first portion, which is located inside the cup relative to said stop, the second surface being an inner surface of the cup against which said adhesive joint is disposed and the first part closing the cup in a sealed manner with the aid of this adhesive joint; **characterised in that** a separator (9) is incorporated in the adhesive of the adhesive joint (4) to guarantee a minimum thickness of this adhesive joint.

9. Battery according to claim 8, **characterised in that** the cup (2) includes a bottom (2a) surmounted by a side wall (2b), which ends in a rim (2c) at least partially forming said stop, said welded joint (5) being positioned at the junction between the bottom (2a) and the side wall (2b).

10. Battery according to claim 8, **characterised in that** the cup (2) includes a bottom (2a) surmounted by a side wall (2b) which ends in a rim (2c) at least partially forming said stop, said welded joint (5) being positioned on the side wall (2b).

11. Battery according to claim 8, **characterised in that** the cup (2) includes a bottom (2a) surmounted by a side wall (2b) ending in a rim (2c) at least partially forming said stop, said welded joint (5) being positioned at the junction between the side wall (2b) and the rim (2c).

12. Battery according to any one of claims 9 to 11, **characterised in that** there is no superposition between said first part (3) and the side wall (2b) of the cup (2).

13. Battery according to any one of claims 8 to 12, **characterised in that** the adhesive joint (4) has a constant thickness controlled by means of said separator (9).

14. Battery according to any one of claims 8 to 13, **characterised in that** the adhesive joint (4) is inserted between two silica layers (10) anchored in said first and second surfaces (3a, 6a).

15. Battery according to any one of claims 8 to 14, **characterised in that** the adhesive joint (4) is chemically linked to the first and second surfaces or, where appropriate, to the silica layers (10) deposited thereon via an adhesion promoter layer (11).
